Europäisches Patentamt

European Patent Office

Office européen des brevets

(11) Publication number: **0 336 665**
**A2**

## (12) EUROPEAN PATENT APPLICATION

(21) Application number: 89303235.9

(22) Date of filing: 31.03.89

(51) Int. Cl.⁴: **H01S 3/108**

(30) Priority: 01.04.88 US 176810

(43) Date of publication of application:
**11.10.89 Bulletin 89/41**

(84) Designated Contracting States:
**AT DE FR GB IT SE**

(71) Applicant: **LASERSCOPE**
**3052 Orchard Drive**
**San Jose California 95134(US)**

(72) Inventor: **Kuizenga, Dirk J.**
**1075 Astoria Drive**
**Sunnyvale California 94087(US)**

(74) Representative: **Jones, Ian et al**
**POLLAK MERCER & TENCH High Holborn**
**House 52-54 High Holborn**
**London WC1V 6RY(GB)**

(54) **Laser resonator system.**

(57) In a laser resonator system, intra-cavity generation of second and higher harmonic frequency laser radiation is improved by inclusion of a lens or multiple-lens arrangement that focuses electromagnetic radiation emitted by the active laser medium (LM) on a wavelength conversion means (NLC) within the cavity or on removal means (RM) to remove the second or higher harmonic radiation from the cavity.

FIGURE 6

## LASER RESONATOR SYSTEM

This invention relates to a laser resonator system.

Optical second harmonic generation ("SHG") using a non-linear medium such as a crystal or other similar means, provides a method for doubling, or more generally producing the $N^{th}$ harmonic of, the frequency of electromagnetic radiation emitted by a laser or other high intensity source. Other interactions in a nonlinear medium can produce new wavelengths of light by sum and difference freq. generation, parametric amplification, and related phenomena such as stimulated raman scattering. Second harmonic generation, using a ruby laser to produce light of wavelength substantially 3470 Å, was first reported by Franken, Hill, Peters and Weinreich in Phys. Rev. Letters 7 118 (1961). The theory of intra-cavity SHG has been discussed by R.G. Smith, I.E.E.E. Jour. of Quantum Electr. $\overline{QE}$-6, 215-223 (1970) and by many others. Franken and Ward, in Rev. Mod. Phys. 35 23 (1963) has noted that a crystalline medium can produce a second harmonic of the frequency of the incident radiation only if the crystal lacks inversion symmetry so that the second order polarization tensor $d^{ij}$ in the lowest order non-linear polarization term, $P_{(2)} = \Sigma_{i,j}^{3}{}_{=1} d^{ij} E_i E_j$ ($E_i = i^{th}$ component of radiation source electric field) does not vanish. If the crystal has inversion symmetry, the lowest order non-linear polarization contribution is cubic in the electric field strengths, and this crystal will produce only third or higher harmonics of the initial frequency. Beam or parametric production of harmonics has been demonstrated in crystals such as $LiNbO_3$, $Ba_2Na(NbO_3)5$, $LiO_3$, KDP, $KTiOPO_4$ and $K_xRb_{1-x}TiOPO_4$. Laser lines for which SHG has been demonstrated include $\lambda = 0.946\mu m$, $1.064\mu m$ ($Nd^{3+}$:YAG) and $\lambda = 0.69$ m (ruby).

The present invention provides intra-cavity means to generate optical wavelengths of light or radiation, using a non-liner crystal or other conversion means positioned within the optical cavity containing the active laser medium, by arranging for radiation emitted by the active lasermedium to be relayed image-wise to an adjacent surface or inside the active volume of the conversion means.

The invention in one embodiment may include an optical cavity, an active laser medium and a non-linear SHG crystal or other conversion means positioned adjacent to one another within the cavity, wavelength-selective coupling to facilitate the removal of SHG radiation from the optical cavity, and optical imaging means positioned within the optical cavity to substantially direct electromagnetic radiation emitted by the active laser medium onto the conversion means. The invention thus provides for the efficient production of nonlinear optical products of laser radiation, using intracavity optical means.

The invention is further described below, by way of example, with reference to the accompanying drawings, in which:

Figures 1 and 2 are schematic views of a folded laser system (L shaped) without a lens and with a lens (for optical mode control), respectively, within the optical cavity.

Figure 3 is a graphic view of multi-mode spot size or beam radius for a resonator such as illustrated in Figure 1, as a function of the effective focal length (EFL) of the laser medium, for an Nd = YAG rod.

Figure 4 is a schematic view of the idealized focusing properties of a single thin lens L.

Figure 5 is a schematic view of the focusing properties of a two lens system applied to a light beam.

Figure 6 is a schematic view of a laser resonator system containing a two lens optical relay and showing the conjugate planes of the two lens system.

Figure 7 is a graphic view of multi-mode spot size as a function of EFL, for a two lens system such as shown in Figure 5.

Figure 8 is a schematic view of a folded laser resonator using two curved intermediate mirrors (M3.M4) of negative curvature as the first and second lenses for the optical relay.

Figure 9 is a schematic view of a linear laser resonator according to the invention, with the two lens optical relay, showing the use of a two lens relay "beyond" the position of a removal means RM (dichroic mirror or similar means) that is used to remove the second harmonic component from the optical cavity.

Figures 10, 11, 12 and 13 are schematic views of linear optical resonators for different arrangements of the optical relay OR, the removal means RM and the nonlinear crystal NLC according to the invention.

Figures 14-25 are schematic views of folded optical resonators for different arrangements of the optical relay OR, the removal means RM and the nonlinear crystal NLC according to the invention.

Figure 26 is a graphic view of the variation of the second harmonic output component from a representative second harmonic crystal, such as $KTiOPO_4$ ("KTP"), with variation in lamp current supplied for pumping the laser medium (here, an Nd:YAG rod).

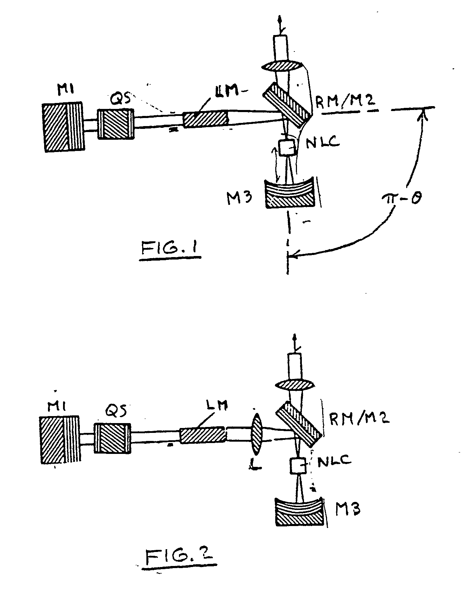

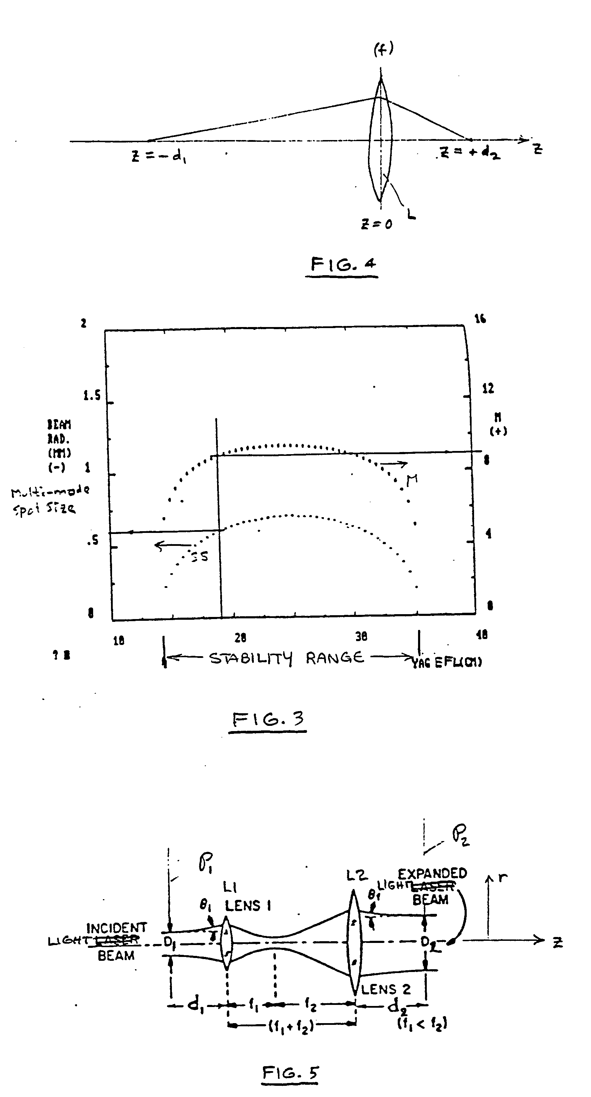

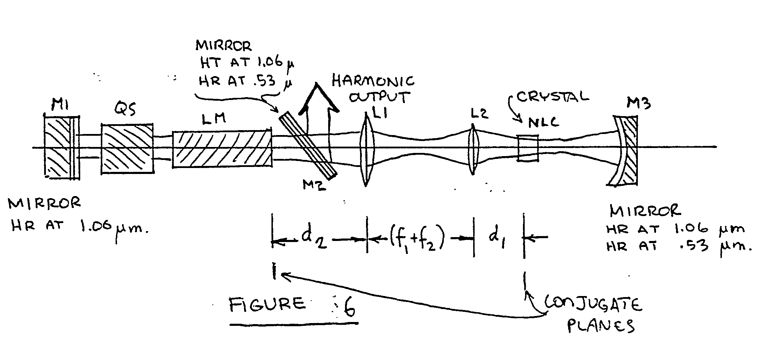

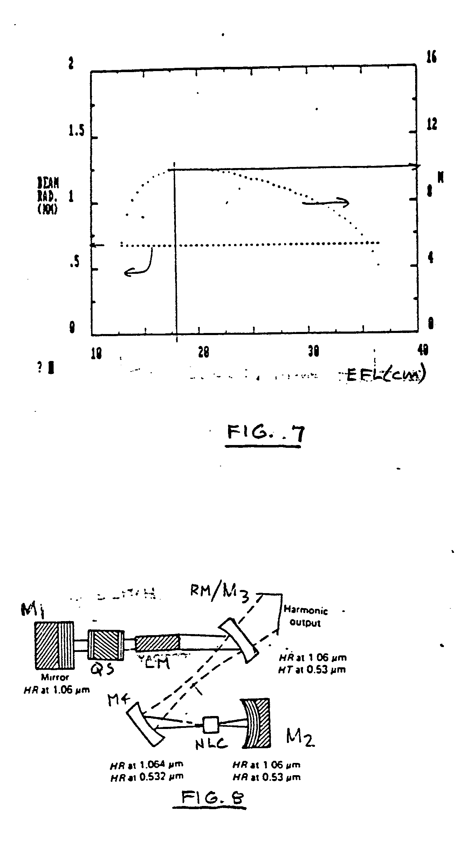

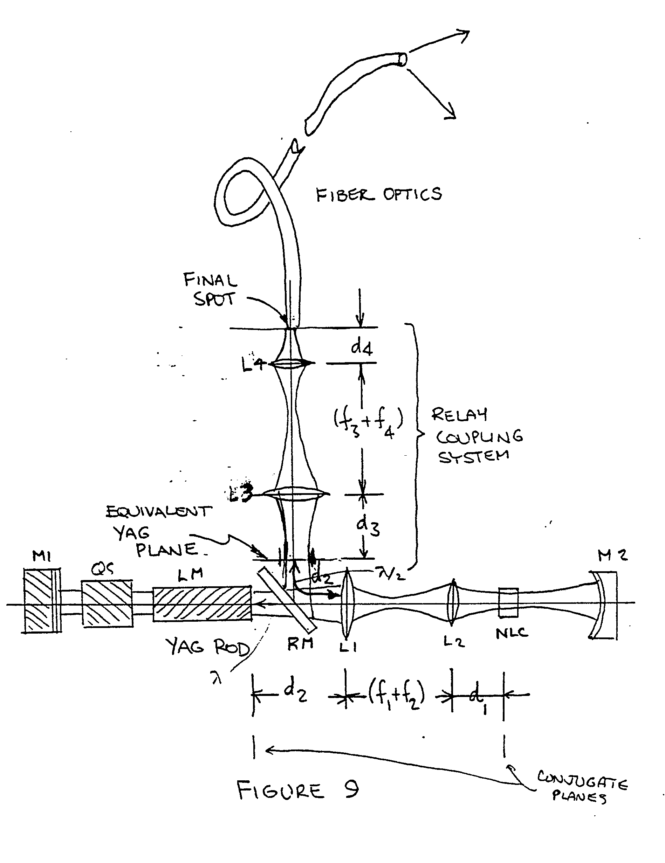

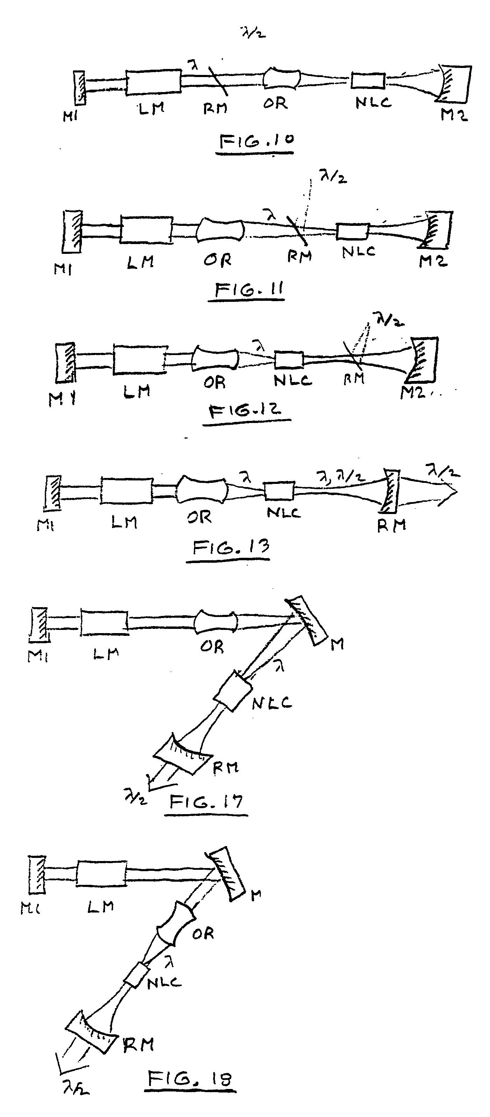

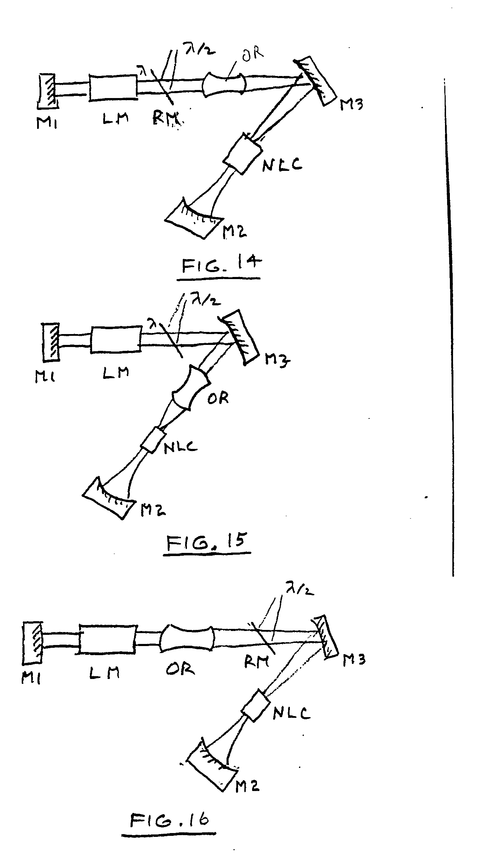

A typical resonator for a high power laser includes an intra-cavity SHG crystal NLC, two or three mirrors M1, M2 (and M3), the active laser medium LM, and removal means RM to remove the second harmonic radiation from the cavity, as shown schematically in Figure 1 In Figure 1 the resonator is folded into an "L" shape at the output mirror with operative angle $\theta$ ($0 < \theta < \pi$) in order to couple out the harmonic beam travelling in both directions through the crystal. This arrangement also prevents the harmonic beam from passing through the laser medium, which is usually absorbing at the harmonic wavelength. The configuration of Figure 1 may also include a means QS for Q-switching the cavity (optional).

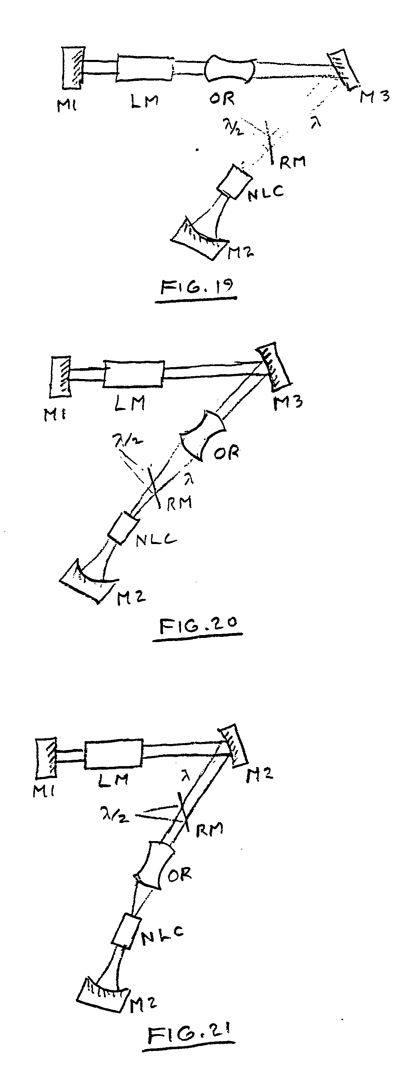

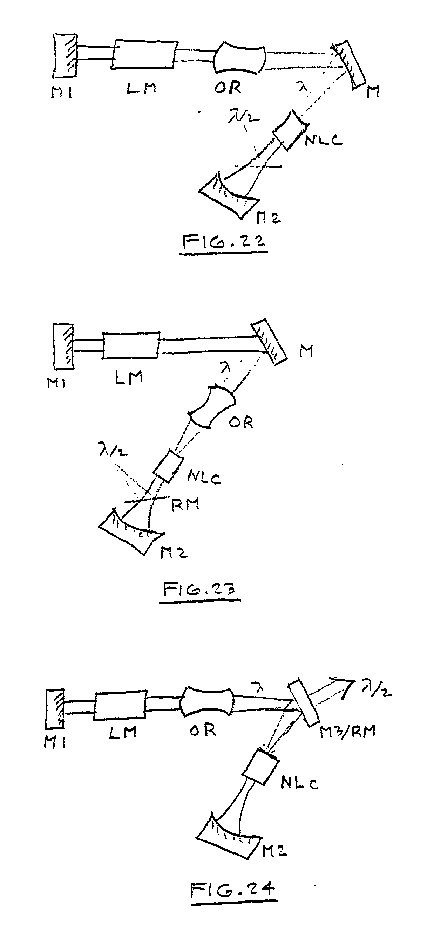

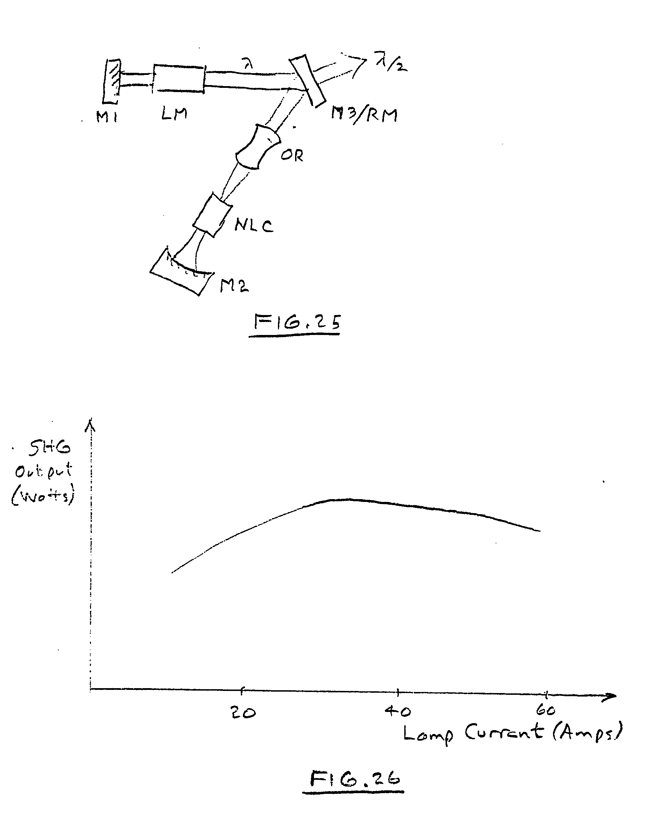

One common high power laser medium is Nd:YAG which, in addition to its role of providing optical gain, behaves as a parasitic lens element. The Effective Focal Length (EFL) of the Nd:YAG depends on the spatial distribution of thermally induced strain in the rod which, in turn, depends on the power absorbed from the arc-lamp. Any factor that alters this power absorption, such as the reflectivity of the lamp housing or the age of the lamp, can change the EFL of the laser rod. Some designers have included an explicit lens in the resonator in addition to the implicit, thermally-generated lens in the rod, for use in optical mode control but not for focusing. One example is the resonator as shown in Figure 2.

The spot sizes at the various surfaces in the resonator can be calculated by standard techniques; one finds that the multi-mode spot size on the SHG crystal depends on all the relevant distances and the optical powers of the various mirrors and lenses. The dependence of spot size on the rod EFL is especially important as it determines an allowable range of input power from the arc lamp for which the resonator behaves in a "stable" manner. Stability in this context is a technical term that implies that an optical ray traversing the resonator system will retrace the same path after one complete round trip. One way to demonstrate this stability is to plot the multi-mode spot size versus the EFL; this curve is shown in the lower curve of Figure 3. The upper curve is an indication of the number of higher-order modes functioning in the resonator. A measure of resonator "quality" in the range in EFL for which the spot size has no significant variation. Note that the spot size can become much smaller for values of EFL near the edges of the stability range. If the resonator operates with these smaller spot sizes, the chances of damaging the intra-cavity SHG crystal are significantly increased as the power density will increase inversely with the square of the diameter. In this type of resonator, both the size and position of the beam waist changes as the EFL is varied. Thus designer control over power density is limited, at best.

When a laser medium, such as an Nd:YAG rod, is received, the following procedure is preferably followed. The laser power supply is connected to the crystal and the electrical current output is varied to determine the pumping lamp current value for which the second harmonic output component, or more generally the $N^{th}$ harmonic output component, from the crystal is maximized. The Nd:YAG rods often used, have 4mm diameter by 79mm length and have 1.1 atomic percent Nd doping. For such rods, a current of 26-36 Amps, corresponding to a power input to the lamp of 2.6-3.6 kilowatts, usually yields the maximum SHG output component. The SHG output decreases on either side of this current value, as shown in Figure 26. For this optimal choice of current the EFL of the Nd:YAG rod is usually 18-21 cm; increasing the lamp current will usually decrease the EFL, and inversely. However, as indicated in Figure 3, as the EFL decreases below approximately 18 cm the multimode spot size or beam radius decreases sharply. In practice, for an Nd:YAG rod of the dimensions set forth above, an EFL in the approximate range of 18-36 cm is desirable. These numbers (optional lamp current, preferred range of EFL) will change with the dimensions and the material used to fabricate the crystal; but the qualitative effects will be similar with other laser crystals such as rare earth-doped crystals or any of the crystals mentioned on the Background section above.

Central to this invention is the observation that one can use an imaging or relay system inside the resonator to relate the size of the spot at the SHG crystal to fixed geometrical factors that do not change with the rod EFL. For example, if the rod and SHG crystal are placed in conjugate planes of an imaging system with magnification, m, then it is possible to design a resonator whose multi-mode spot size in the crystal is virtually constant at a value which is m times smaller than the effective aperture of the Nd:YAG rod.

The simplest imaging-system is a single lens L in which the conjugate planes are defined by the well-known lens equation

$$1/d_1 + 1/d_2 = 1/f,$$

where f is the focal length and $d_1$ and $d_2$ are corresponding distances of an axial source and its axial image from the lens L, as shown in Figure 4. The ABCD or ray matrix for this system between conjugate planes is

$$M = \begin{bmatrix} -m & 0 \\ -1/f & -1/m \end{bmatrix}$$

The presence of a non-zero off-diagonal element suggests that a transformation by this simple imaging system does not preserve the phase; in fact, only the magnitude of the light distribution is relayed between the conjugate planes, with magnification m. In actual designs with a single lens imager, one finds that the multi-mode spot size is indeed constant, but that the region of resonator stability exists only for rather short range of Nd:YAG EFLs and that very high-order modes exist that make it difficult to couple such a laser into a optic fiber delivery system.

An alternative imaging, or relay system is a Keplerian-type beam expander containing two axially-oriented lenses, such as shown in Figure 5, and a resonator using this relay system is shown in Figure 6. This has the interesting property that it will relay both the magnitude and phase of any light distribution at the input conjugate plane to the output conjugate plane with a magnification m. For analysis of the full ray matrix see the analysis presented in A. Yariv, Optical Electronics, Holt, Rinehart and Winston, 1985, Third Edition, pp. 17-22, which is incorporated herein by reference. The ray matrix description of the arrangement in Figure 5 is

$$\begin{bmatrix} r_2 \\ u_2 \end{bmatrix} = \begin{bmatrix} 1 & d_2 \\ 0 & 1 \end{bmatrix} \begin{bmatrix} 1 & 0 \\ -1/F_2 & 1 \end{bmatrix} \begin{bmatrix} 1 & f_1 + f_2 \\ 0 & 1 \end{bmatrix} \begin{bmatrix} 1 & 0 \\ -1/F_1 & 2 \end{bmatrix} \begin{bmatrix} 1 & d_1 \\ 0 & 1 \end{bmatrix} \begin{bmatrix} r_1 \\ u_1 \end{bmatrix}$$

$$= \begin{bmatrix} A & B \\ C & D \end{bmatrix} \begin{bmatrix} r_1 \\ u_1 \end{bmatrix} \qquad (1)$$

relating the ray descriptors $r_1$ and $u_1 = (\frac{dr}{dz})_1$ , of a ray at one plane P, in Figure 5 to the ray descriptors $r_2$ and $u_2 = (\frac{dr}{dz})_2$ of the ray at the conjugate plane $P_2$.

The off-diagonal terms B and C vanish and phase can be preserved, only if

$f^2/(f_1 - d) + f_2^2/(f_2 - d_2) = 0$,    (2)

or

$md + d_2 m = f_1 + f_2$    (2')

$m = f_2/f_1$,    (3')

and the diagonal terms become

$A = -f_2/f_1 = -m$,    (4)

$D = -f/f_2 = 1/A = -1/m$.    (5)

The quantity $m = f_2/f_1$ may be identified with the magnification of the system, and the minus sign in the two diagonal terms in Eq (1) indicate that the image is inverted.

Some typical values for a real system are: $f_1 = 10$ cm, $f_2 = 25$ cm, and $m = f_2/f_1 = 2.5$. For an effective diameter of 3.6 mm for a Nd:YAG rod, the spot diameter in the SHG crystal will be 3.6mm/2.5 = 1.44 mm.

Actual designs with this two-lens relay system yield much better ranges in rod EFL for stable operation compared to the single lens system. A typical stability diagram is shown in Figure 7. A complete resonator analysis confirms the constant multi-mode spot size arguments above, and a resonator with this constant-spot-property removes the likelihood that operation near instability could result in very small spot sizes and high power densities. Thus damage to the crystal is minimized. One should note that, in general, when the SHG crystal is located in one of the relay system's conjugate planes, it is not coincident with a beam-waist in the resonator.1

One need not use transmissive optics to accomplish the two-lens design; reflective optics can be used, and one arrangement of such a resonator is shown in Figure 8.

The two-lens relay system can also be used effectively to transfer a constant-spot-size beam from the laser to a final spot location as determined by the application. One such application is the launching of laser-generated harmonics into an optical fiber. The schematic for such a system is shown in Figure 9. Here the relay design concept begins from the realization that there is a plane in the output beam which is equivalent to the end of the Nd:YAG rod. This equivalent plane is also a distance $d_2$ from lens 2 but is folded by the wavelength-selective beam splitter. The multi-mode spot size in the equivalent plane is the same as the spot size of the YAG itself.

Given this substantially constant spot size in space, one can employ the same relaying properties of the two-lens system to transfer a magnified (or demagnified) version of the spot to a relevant position in space, say the input end of an optical fiber. Figure 9 shows such an output coupling relay system comprised of lenses L3 and L4 positioned so that the conjugate planes are coincident with the laser medium equivalent plane and the fiber input. Figure 9 also shows the removal means RM that is used to remove the second harmonic component from the optical cavity; RM may be a dichroic mirror that transmits light of wavelength $\lambda$ and reflects light of wavelength $\lambda/2$.

Once again, it should be noted that the conjugate planes of both relay systems shown in Figure 9 need not, in general, coincide with the Gaussian beam waists in the system. If flat wavefronts at a particular position are important to a specific application, the same design principles apply, except that additional lenses may be required to correct wavefront curvatures. Additional lenses may be required when reflective optics are used; transmitted beams are modified by the optical power of spherical substrates, but in either case the design principles are staightforward adaptations of the underlying relaying principle.

The relative positions of the optical relay or/and the removal means RM within the cavity may be permuted, and in some instances the second or third mirror may serve as the removal means. Where two rather than three mirrors define the optical cavity (usually linear), at least four distinct combinations of positions are available. In Figure 10, the order of positions is first mirror M1, laser medium LM, removal means RM, the nonlinear crystal or other wavelength conversion means NLC and the second mirror M2. The removal means RM is shown here for simplicity as a partly transmitting, partly reflecting mirror but other types of removal means RM may also be used. The optical relay means OR is shown here for simplicity as a single lens, but it is understood that more general optical relay means OR may also be used. In a second linear embodiment, shown in Figure 11, the order is M1, LM, OR, RM, NLC and M2. In a third linear embodiment, shown in Figure 12, the order is M1, LM, OR, NLC, RM and M2. Figure 13 has substantially the same arrangement as in Figure 12, but the removal means and second mirror are merged together and denoted M2/RM. IN the four embodiments of Figures 10-13, the second mirror is preferably spherical or curvilinear rather than planar.

If one uses three mirrors M1, M2 and M3 to define the optical cavity, at least 12 embodiments exist, as illus trated in Figures 14-25. In Figure 14, the order is M1, RM, OR, M2, NLC and M3. In Figure 15, the order is M1, LM, RM, M2, OR, NLC and M3. Figure 16 is substantially the embodiment of Figure 14, with the relative positions of removal means RM and optical relay OR interchanged. Figures 17 and 18 are substantially the embodiments of Figures 14 and 15, with the removal means and third mirror M3 merged together and denoted M3/RM. In Figure 19, the order is M1, LM, OR, M2, RM, NLC and M3. In Figure 20, the order is M1, LM, M2, OR, RM, NLC and M3. In Figure 22, the order is M1, LM, OR, M2, NLC, RM and M3. In Figure 23, the order is M1, LM, M2, OR, NLC, RM and M3. In Figures 24 and 25, the removal means RM and the second mirror merge and are denoted M2/RM. In Figure 24, the order is M1, LM, OR, M2/RM, NLC and M3. In Figure 25, the order is M1, LM, M2/RM, OR, NLC and M3.

With reference to Figure 6, a wave propagating along an axis AA away from a first mirror toward an optical relaying system within the cavity may not have a planar wave front; and if such wave passes through another optical element before it reaches the optical relaying system, the refractive power of this optical element will not be the same for all rays associated with the wave but will vary with the distance from the axis of the surface point of the optical element intersected by the ray. Before this wave reaches the optical relaying system, the wave should be corrected (1) for varying refraction by intervening optical elements and (2) to flatten or make planar the wave front. Although the preferred embodiments of the invention have been shown and described herein, variation and modification may be made without departing from the scope of the invention. In particular, although the description has considered second harmonic generation, the same principles apply to a crystal that produces third, or more generally $N^{th}$ harmonics. For example, a crystal such as $CdHg(SCN)_4$, which has a center of inversion, would produce third harmonic light as the lowest order nonlinear component.

## Claims

1. A laser resonator system comprising:
an optical cavity M1,M2;M1,M2,M3 that is resonant for electromagnetic radiation of a first predetermined wavelength $\lambda_1$;
a laser medium (LM), positioned within the optical cavity, to produce a beam of electromagnetic radiation of wavelength substantially $\lambda_1$;
a nonlinear crystal or other wavelength conversion means (NLC), positioned within the optical cavity and spaced apart from the active laser medium by a predetermined distance and positioned to receive, directly or indirectly, radiation of wavelength substantially $\lambda_1$ produced by the active laser medium and to produce a beam of radiation of wavelength substantially $\lambda_1/N$, where N is a predetermined integer $\geq 2$;
relaying means (OR), positioned within the optical cavity between the active laser medium and the nonlinear crystal that accepts a radiation beam of a first predetermined diameter $d_1$ from the active laser medium and relays this radiation as a beam of a second predetermined diameter $d_2$ to the nonlinear crystal; and
removal means (RM;M2/RM; M3/RM) positioned within or forming part of the optical cavity, to receive radiation of wavelength substantially $\lambda_1/N$ directly or indirectly from the nonlinear crystal and to allow at least a portion of this radiation to exit from the optical cavity.

2. A system as claimed in claim 1 wherein the optical cavity comprises:
a first mirror (M1) that is highly reflecting at the wavelength $\lambda_1$;
a second mirror (M2) positioned to receive radiation directly or indirectly from the first mirror at a predetermined non-zero incidence angle $\theta_2$ and to reflect this radiation in another direction, with the second mirror being highly reflecting at the wavelength $\lambda_1$ for radiation that is incident on the second mirror at an incidence angle of $\theta_2$; and
a third mirror (M3) that is highly reflecting for radiation at the wavelength $\lambda_1$ and at the wavelength $\lambda_1/N$ and is positioned to receive and reflect at substantially normal incidence radiation that is received and reflected by the second mirror from the first mirror.

3. A system as claimed in claim 2 wherein the removal means (RM) is positioned so that the second mirror (M2) lies between the third mirror (M3) and the removal means (RM) wherein the second mirror is highly reflective at the wavelength $\lambda/N$ for radiation that is incident on the second mirror at the incidence angle $\theta_2$.

4. A system as claimed in claim 3 wherein the relaying means (OR) is positioned between the removal means and the second mirror.

5. A system as claimed in claim 3 wherein the relaying means (PR) is positioned between the second mirror and the wavelength conversion means.

6. A system as claimed in claim 3 wherein the relaying means (OR) is positioned so that the removal means lies between the relaying means and the second mirror.

7. A system as claimed in claim 2 wherein the removal means (RM) is positioned between the second mirror and the third mirror.

8. A system as claimed in claim 7 wherein the relaying means (OR) is positioned between the first mirror and the second mirror.

9. A system as claimed in claim 8 wherein the removal means (RM) is positioned between the second mirror and the wavelength conversion means.

10. A system as claimed in claim 8 wherein the removal means (RM) is positioned between the wavelength conversion means and the third mirror.

11. A system as claimed in claim 7 wherein the relaying means (OR) is positioned between the second mirror and the wavelength conversion means.

12. A system as claimed in claim 11 wherein the removal means (RM) is positioned between the wavelength conversion means and the third mirror.

13. A system as claimed in claim 7 wherein the relaying means (OR) is positioned between the removal means and the wavelength conversion means.

14. A system as claimed in claim 1 wherein the optical cavity comprises:
a first mirror (M1) that is highly reflecting at the wavelength $\lambda_1$, and a second mirror (M2) positioned to receive and reflect at substantially normal incidence radiation directly or indirectly from the first mirror, the second mirror being highly reflective for radiation at the wavelength $\lambda$, and at the wavelength $\lambda_1/N$; and
wherein the removal means (RM) includes a third mirror positioned to receive radiation directly or indirectly from the first mirror at a predetermined non-zero incidence angle $\theta_2$ and to reflect this radiation in another direction, with the second mirror being highly reflective at the wavelength $\lambda_1$ and being transmissive at the wavelength $\lambda_1/N$ for radiation that is incident on the third mirror at the incident angle $\theta_2$.

15. A system as claimed in claim 1 wherein the optical cavity comprises:
a first mirror (M1) that is highly reflecting at the wavelength $\lambda_1$; and
a second mirror (M2) that receives radiation directly or indirectly from the first mirror at substantially normal incidence, with the second mirror being highly reflecting at the wavelength $\lambda_1$.

16. A system as claimed in claim 15 wherein the removal means (RM) is positioned between the active laser medium and the relaying means, and the relaying means is positioned between the removal means and the wavelength conversion means.

17. A system as claimed in claim 15 wherein the relaying means (OR) is positioned between the active laser medium and the removal means, and the removal means is positioned between the relaying means and the wavelength conversion means.

18. A system as claimed in claim 15 wherein the relaying means (OR) is positioned between the active laser medium and the wavelength conversion means, and the removal means is positioned between the wavelength conversion means, and the removal means is positioned between the wavelength conversion means and the second mirror.

19. A system as claimed in any preceding claim wherein the relaying means (OR) is a lens of predetermined focal length $f_1$, spaced apart from the active laser medium by a predetermined distance $d_1$ and spaced part from the wavelength conversion means by a predetermined distance $d_2$, where F, $d_1$ and $d_2$ are related substantially by the relation
$1/f_1 = 1/d_1 + 1/d_2$.

20. A system as claimed in any one of claims 1-18 wherein the relaying means (OR) comprises a first lens of predetermined focal length $f_1$ and a second lens of predetermined focal length $f_2$, and where the first lens lies between the second lens and the active laser medium, the second lens lies between the first lens and the wavelength conversion means, the first lens and the second lens are spaced apart by a distance of substantially $f_1 + f_2$, the first lens is spaced apart from the active laser medium by a predetermined distance $d_2$, and $f_1$, $f_2$, $d_1$ and $d_2$ are related substantially by the relation $md_1 + d_2/m = f_1 + f_2$, where $m = f_2/f_1$, is the magnification of the relaying means.

21. A system as claimed in any preceding claim wherein the laser medium (LM) is a solid crystal that is substantially transparent to radiation at the wavelength $\lambda$ and is doped with a predetermined percentage of rare earth ions.

22. A system as claimed in any preceding claim wherein the wavelength conversion means (NLC) is a crystal of $LiNbO_3$, $Ba_2Na(NbO_3)_5$, $LiO_3$, KDP, $KTiOPO_4$ or $K_xRb_{1-x}TiOPO_4$.

23. A system as claimed in any preceding claim wherein the removal means (RM) is a dichroic mirror oriented at a predetermined angle relative to the path of laser beam.

FIG. 1

FIG. 2

FIG. 4

FIG. 3

FIG. 5

MIRROR
HT AT 1.06 μ
HR AT .53 μ

HARMONIC
OUTPUT

CRYSTAL
NLC

M1    QS    LM    L1    L2    M3

MIRROR
HR AT 1.06 μm.

M2

MIRROR
HR AT 1.06 μm
HR AT .53 μm.

$d_2$ — $(f_1+f_2)$ — $d_1$

FIGURE 6

CONJUGATE
PLANES

FIG. 7

FIG. 8

FIGURE 9

FIG. 10

FIG. 11

FIG. 12

FIG. 13

FIG. 17

FIG. 18

FIG. 14

FIG. 15

FIG. 16

FIG. 19

FIG.20

FIG.21

FIG.22

FIG.23

FIG.24

FIG.25

FIG.26